# FASCICULE DE BREVET EUROPEEN

(11) **EP 2 278 243 B1**
(45) Date de publication et mention de la délivrance du brevet: **20.06.2012**
(21) Numéro de dépôt: 10290339.0
(22) Date de dépôt: 23.06.2010
(51) Int. Cl.: F27B 7/34, C10B 47/30, C10B 53/02, F23G 5/027, F23G 5/20, C10L 5/44, F23G 5/08, C10L 9/08

(54) **Four tournant pour traitement thermique radiatif de matériaux solides**
Drehofen für Strahlungswärmebehandlung für Feststoffe
Rotating oven for radiating heat treatment of solid materials

(30) Priorité: 21.07.2009 FR 0903587
(43) Date de publication de la demande: 26.01.2011
(73) Titulaire: IFP Energies nouvelles, 92852 Rueil-Malmaison Cedex (FR)
(72) Inventeur: Sanz, Elena, 69001 Lyon (FR); Rolland, Matthieu, 69390 Vernaison (FR)

(56) Documents cités:
- WO-A-97/33469
- DE-A1- 2 432 425
- JP-A- 2005 037 044

## Description

La présente invention concerne le domaine des fours de traitement thermique de matériaux solides, et plus particulièrement des fours de pyrolyse (ou thermolyse) ou torréfaction destinés à traiter des solides tels que des déchets de toute nature, et par exemple de la biomasse.

Il est déjà connu des brevets décrivant des fours tournants de pyrolyse ou de thermolyse, comme par exemple le brevet FR 2 720 487 qui concerne un four tournant appliqué à la pyrolyse des déchets dans lequel les transferts radiatifs sont dominants du fait de plus hautes températures (600 °C). Le four tournant est un tube creux horizontal tournant autour de son axe de révolution et dans lequel s'écoule un solide. Le four est légèrement incliné, l'entrée étant plus haute que la sortie, de sorte qu'à chaque révolution, les solides divisés s'élèvent avec la paroi et chutent un peu en avant de leur point de départ. La vitesse de rotation et la pente du four sont choisies pour favoriser le mélange de la charge et donc un traitement homogène de chaque particule.

Dans ce type de dispositif la chaleur est principalement apportée par l'extérieur du tube chauffé par circulation de gaz chauds autour du tube (vapeur, air, fumées de combustibles diluée ou refroidie) ou par rayonnement (électrique ou flamme). La circulation des gaz à l'intérieur du tube est faible pour éviter l'entraînement pneumatique des particules, ce qui limite les possibilités de transfert par convection. Etant donné les températures élevées auxquelles le four est chauffé, les transferts thermiques vers la charge se font principalement par rayonnement et peu par conduction (contact entre la charge et les parois chauffées du four).

Dans le cas de la torréfaction de biomasse, les températures requises (entre 220°C et 300°C) font que les transferts radiatifs sont négligeables. Les transferts par conduction sont proportionnels à la surface de contact, à l'écart de température entre la charge et la paroi et à un coefficient de transfert de chaleur de la paroi à la charge. Le coefficient de transfert dépend des propriétés de la charge et n'est pas un paramètre, il vaut typiquement 10-20 W/m²/°C. L'écart de température charge/paroi est limité par la nature même de la biomasse ligno-cellulosique. Au delà d'une température de 280-300°C selon les essences, des réactions exothermiques commencent et s'auto-entretiennent par effet d'accélération thermique des cinétiques. Ces réactions conduisent à des solides pyrolysés ayant perdu une grande quantité de leur masse et de leur énergie. La perte de rendement est importante et il est nécessaire de se placer dans des conditions où les réactions exothermiques ne peuvent avoir lieu.

Pour ces raisons, la solution généralement retenue pour augmenter les transferts thermiques est l'augmentation de la longueur du four tournant pour accroître la surface de contact avec la biomasse. Cette technique est coûteuse en terme d'investissement et de consommation énergétique.

Une autre solution consiste à augmenter le temps de séjour dans le four en diminuant l'inclinaison du four et en diminuant le débit pour conserver la même hauteur de lit, ce qui conduit à une diminution de la capacité.

Une autre solution décrite dans le brevet JP 2005037044 consiste à disposer une plaque radiale chauffante dans le four tournant de thermolyse, cette plaque étant fixée de part et d'autre aux parois du four. La plaque tourne avec le four et émet un rayonnement qui chauffe la charge. Pour permettre à la charge de circuler, la plaque comporte des perforations.

Les brevets JP2003307388 et WO 98/54273 décrivent un four comportant un élément chauffant longitudinal de la longueur du four de thermolyse émettant des radiations permettant de chauffer la charge.

Un inconvénient de ces deux dernières solutions provient du fait que l'élément chauffant émet dans toutes les directions, et pas uniquement dans celle où se trouve la charge. Il y a donc une perte importante d'énergie, ce qui augmente le coût du traitement thermique. De plus l'émission des radiations vers la paroi du four, à des endroits où il n'y a pas de charge, chauffe exagérément les parois du four et risque de provoquer ensuite des réactions exothermiques.

Le brevet WO97/33469, décrit un dispositif du même type mais l'élément chauffant est l'unique source de chaleur, de plus ce brevet ne concerne pas la torréfaction de biomasse.

La présente invention a donc pour objet de palier un ou plusieurs des inconvénients de l'art antérieur en proposant un four tournant permettant d'accélérer le traitement thermique de matériaux solides et notamment la biomasse, de diminuer la taille des équipements et donc de diminuer le coût de la torréfaction, tout en respectant les températures maximum de la paroi du four tournant et en limitant les réactions exothermiques.

Pour cela la présente invention propose un four tournant destiné au traitement thermique de matériaux solides comprenant au moins un tube tournant dans lequel sont introduits les matériaux solides et un moyen de chauffage externe au tube tournant permettant de réaliser une partie du traitement thermique en absence d'oxygène, caractérisé en ce qu'il comporte un deuxième moyen de chauffage ne tournant pas avec le four, de la charge pour améliorer le traitement thermique, formé par un élément chauffant positionné pour être au dessus de la charge lorsque le four tourne et au moins un panneau déflecteur entourant l'élément chauffant au niveau du coté opposé à la charge, disposé à l'intérieur du tube tournant.

Selon un mode de réalisation de l'invention, l'élément chauffant est rectiligne, longitudinal et parcourt toute la longueur du four tournant.

Selon un mode de réalisation de l'invention, la section de l'élément chauffant est polygonale ou ronde ou ovoïde.

Selon un autre mode de réalisation de l'invention, la section de l'élément chauffant est plane ou concave ou convexe.

Selon un mode de réalisation de l'invention, la largeur de l'élément chauffant est comprise entre 1/60^{ième} et 2/3 du diamètre interne du tube du four et la hauteur est comprise entre 1/20 et 4/4 de la largeur de l'élément chauffant.

Selon un mode de réalisation de l'invention, l'élément chauffant est fixé par ses extrémités indépendamment du tube du four et ne tourne pas avec le four.

Selon un mode de réalisation de l'invention, la position l'élément chauffant dans le tube du four est excentrée, par rapport à l'axe longitudinal central du tube du four, dans la direction opposée à celle où se trouve la charge.

Selon un mode de réalisation de l'invention, l'élément chauffant est creux ou plein, étanche ou perforé.

Selon un mode de réalisation de l'invention, l'élément chauffant est chauffé par circulation d'un gaz très chaud à l'intérieur de l'élément chauffant ou par combustion ou par un moyen électrique.

Selon un mode de réalisation de l'invention, le panneau déflecteur est longitudinal et de la même longueur que l'élément chauffant.

Selon un mode de réalisation de l'invention, le panneau déflecteur est constitué par un seule partie ou plusieurs parties liées entre-elles, et formant une partie centrale disposée au dessus de l'élément chauffant et deux cotés disposés de part et d'autre de la partie centrale.

Selon un mode de réalisation de l'invention, le panneau déflecteur est en forme de demi tube ou comporte des angles formés par la liaison des différentes parties le constituant.

Selon un mode de réalisation de l'invention, les deux cotés du panneau déflecteur ont une taille qui leurs permets de dépasser de l'élément chauffant.

Selon un mode de réalisation de l'invention, les deux cotés sont orientés de façon à former un angle permettant aux rayonnements de couvrir toute la surface du lit de la charge.

Selon un mode de réalisation de l'invention, le panneau déflecteur est fixé par ses extrémités indépendamment du tube du four et ne tourne pas avec le four.

L'invention concerne également l'utilisation du four tournant pour réaliser le traitement thermique de biomasse.

Selon un mode de réalisation de l'invention, le traitement thermique est un traitement par torréfaction de biomasse solide.

Selon un mode de réalisation de l'invention, le traitement thermique est un traitement thermique radiatif de biomasse.

D'autres caractéristiques et avantages de l'invention seront mieux compris et apparaîtront plus clairement à la lecture de la description faite, ci-après, en se référant aux figures annexées et données à titre d'exemple:
- la figure 1 est une représentation schématique d'une coupe transversale d'une variante du dispositif selon l'invention,
- la figure 2 est une représentation schématique d'une coupe transversale d'une autre variante du dispositif selon l'invention,
- la figure 3 est une représentation schématique d'une coupe longitudinale d'une autre variante du dispositif selon l'invention.

L'invention concerne un four tournant de traitement thermique, comme par exemple la torréfaction, de matériaux solides et par exemple des déchets de type ménagers, agricoles, industriels, et de la biomasse solide. La biomasse solide traitée dans le dispositif selon l'invention peut être par exemple de la ligno-cellulose (bois, paille, algues), de la lignine purifiée, de la cellulose ou un mélange de ces différentes biomasse. La biomasse est en génale sous forme de plaquettes dont l'épaisseur est comprise entre 1 mm et 30 mm, la largeur est comprise entre 1 mm et 40 mm et la longueur est comprise entre 1 mm et 100 mm. La torréfaction réalisée dans le cadre de l'invention consiste en un traitement thermique réalisé à des températures moyennes comprises en générale entre 80°C et 400°C, et de préférence entre 150 C° et 280 C°et en absence d'oxygène.

Le four tournant est un four classique de thermolyse ou pyrolyse tel que déjà décrit dans l'art antérieur. Le four tournant est donc formé par au moins un tube principal étanche dans lequel est introduite, par une extrémité du four, la charge à traiter, et qui est chauffé par un premier moyen de chauffage et par exemple par circulation de fumées chaudes ou par des résistances électriques ou par des brûleurs disposés à l'extérieure du tube. Le tube est ainsi chauffé à une température ne dépassant pas la température maximale, permise par les réactions exothermiques, comprise en général entre 280°C et 400°C. Le tube principal tourne en général autour d'un axe longitudinal permettant ainsi le brassage de la charge et donc un traitement homogène. Le tube du four est en général en acier inoxydable ou non, avec ou sans revêtement.

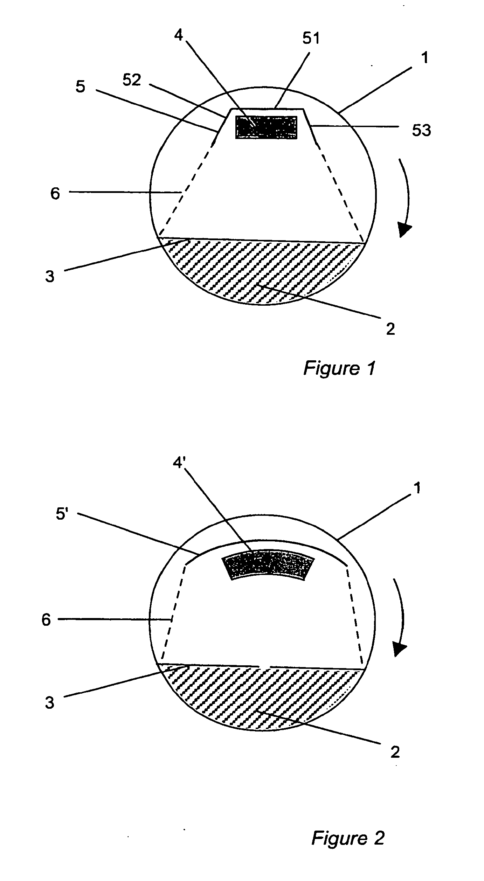

Le tube principal formant le four (1) tournant selon l'invention, illustré sur les figures 1, 2 et 3, comporte une autre source de chaleur de type radiative sans contact avec les particules permettant d'améliorer et/ou finaliser le traitement thermique débuté avec le premier moyen de chauffage externe. Le traitement thermique est ainsi réalisé par la combinaison des deux moyens de chauffage. Cette source de chaleur est formé par un élément (4, 4', 4") chauffant fixe incorporé à l'intérieur du tube du four. Pour être chauffant, cet élément (4, 4', 4") est chauffé à une température à laquelle il rayonne, c'est à dire au dessus de 600°C. Le rayonnement infra-rouge, visible (paroi rouge organée) ou ultra-violet émis par cet élément rayonnant permet un transfert de chaleur vers la charge (2) proportionnel à la température de rayonnement (en K) puissance 4, selon la loi de Stephan-Boltzmann : Φ (flux en W/m²) = σ T⁴ et σ = 5.675 10⁻⁸ W/m²/K⁴. L'intensité des transferts thermiques est alors grandement augmentée, sans modification de la longueur du tube du four, ni augmentation du temps de séjour de la charge dans le réacteur.

L'élément (4, 4', 4") chauffant également appelé élément rayonnant ou élément radiant est conçu de façon à ce que seul le lit (2) de charge puisse recevoir le rayonnement : le tube tournant reste ainsi à la température maximale permise par les réactions exothermiques.

La charge (2) exposée au rayonnement est la charge en surface (3) du lit. Du fait de la rotation du four (1) tournant, la charge (3) exposée au rayonnement est constamment renouvelée et la température de la charge reste homogène et en dessous du seuil critique.

La température de l'élément (4, 4', 4") chauffant est donc régulée de manière à ce que la température de la charge reste en dessous du seuil critique. Le transfert de chaleur en température puissance 4 assure que les effets de régulation soient suffisamment rapides pour éviter des emballements thermiques.

Le traitement thermique de la charge à l'intérieur du four (1) est réalisé en absence d'oxygène.

L'élément (4, 4', 4") chauffant est longitudinal et rectiligne dans le sens de la longueur, et parcourt toute la longueur du four. Il est disposé à l'intérieur du tube du four (1) tournant et dans le sens de la longueur du four. Sa position dans le tube du four est excentrée, par rapport à l'axe longitudinal central du tube du four, dans la direction opposée à celle où se trouve la charge (2). C'est à dire que lorsque le four (1) tourne, la charge (2) se retrouve toujours vers le bas du tube du four (1), l'élément (4, 4', 4") chauffant est donc disposé de façon à se trouver dans la partie haute du tube du four (1). En général la hauteur à laquelle est disposé l'élément chauffant est choisie de manière à ce que toute la charge en mouvement et éventuellement au repos soit « éclairer » par le rayonnement. L'élément (4, 4', 4") chauffant est ainsi en général situé dans la moitié supérieur du tube, à une distance supérieure au rayon du tube de la surface (3) du lit de la charge. L'élément peut être placé dans le plan de symétrie du tube (au milieu), ou bien décalé sur le coté de manière à mieux « éclairer » la charge qui du fait de la rotation est inclinée et est ainsi plus haute d'un coté que de l'autre.

Sa longueur est au moins égale à celle du tube du four (1) de façon à pouvoir être fixé à chacune de ses extrémités. Cet élément (4, 4', 4") chauffant est fixé indépendamment du tube du four (1), il n'a pas de point de contact avec le tube du four (1) sauf peut être par ses extrémités, il ne tourne pas avec le four (1). Il est fixé à ses extrémités par des techniques, bien connues de l'homme du métier, permettant de maintenir l'étanchéité voulue et nécessaire pour le traitement thermique dans le four (1) tournant. L'élément chauffant complet est ainsi en général au moins aussi long que le four pour être fixé, mais la partie chauffante peut être plus courte ou en plusieurs partie pour faciliter la régulation de température. Selon une variante de l'invention l'élément chauffant peut comporter plusieurs zones à des températures différentes. Cela peut permettre par exemple de réaliser le séchage dans une première zone et la torréfaction ensuite dans une zone suivante.

La section de l'élément (4, 4', 4") chauffant peut être de différentes formes: polygonale (carrée, rectangle...), ronde, ovoïde... En général, pour une meilleure efficacité du traitement thermique, la section de l'élément (4, 4', 4") chauffant est plane, c'est à dire plus large que haute par rapport à la partie haute et basse du tube du four (1) tournant.

La largeur de l'élément chauffant est en générale comprise entre 1/60^{ième} et 2/3 du diamètre interne du tube du four et de préférence entre 1/15^{ième} et 1/2 du diamètre interne du tube du four tournant. La hauteur est en générale comprise entre 1/20 et 4/4 de la largeur de l'élément chauffant et de préférence entre 1/10 et 1/2 de l'élément chauffant.

Il est également possible que l'élément chauffant soit composé de plusieurs éléments chauffants disposés cote à cote, ce qui permet d'avoir une largeur importante et une faible hauteur.

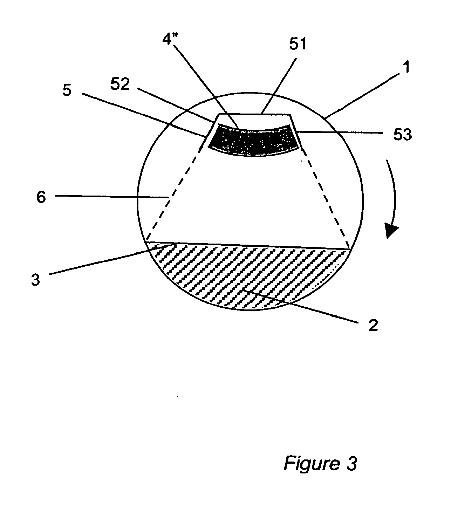

L'élément (4, 4', 4") chauffant de section plane peut être courbé dans le sens de la largeur vers le haut ou le bas, c'est à dire convexe (4') ou concave (4") comme illustré sur les figures 2 et 3. Pour un même élément, la largeur de l'élément peut être constante ou variable.

L'élément (4, 4', 4") chauffant est éventuellement plein ou creux, suivant le mode de chauffage utilisé pour le chauffer et lui permettre ensuite d'émettre des radiations. Il peut être étanche ou perforé pour laisser passer une partie des gaz chaud dans le four.

L'élément (4, 4', 4") chauffant est éventuellement chauffant sur toute sa longueur, c'est à dire sur toute la longueur du four également, ou sur seulement une partie de sa longueur. En général, lorsque l'élément (4, 4', 4") chauffant est chauffé sur seulement une partie de sa longueur, c'est sa partie initiale, correspondant au début de la réaction et à l'entrée de la charge dans le four, qui est chauffée et chauffante. Cette partie correspond également à la zone du four (1) où la température de particule est la plus faible, en particulier là où le séchage de l'humidité résiduelle a lieu.

Le chauffage de l'élément (4, 4', 4") chauffant peut être réalisé par tout moyen connu de l'homme du métier, et par exemple à l'aide de l'un des moyens suivants:
- circulation d'un gaz très chaud issu par exemple de la combustion d'un combustible solide, liquide ou gaz, en particulier de biomasse ligno-cellulosique, le gaz chaud pouvant être utilisé ultérieurement pour produire de la vapeur et/ou de l'électricité (turbine). Dans ce cas le gaz chaud circule à l'intérieur de l'élément chauffant qui est creux sans contact avec l'atmosphère du four.
- circulation d'un gaz très chaud issu par exemple de la combustion d'un combustible solide, liquide ou gaz, en particulier de biomasse ligno-cellulosique, le gaz chaud étant mélangé à l'atmosphère du four de traitement thermique apportant ainsi de la chaleur supplémentaire. La température des fumées est ajustée de manière à ce que la température des gaz contenus dans le four soit toujours inférieure à la température critique de la biomasse. Dans ce cas, le gaz circule à l'intérieur de l'élément qui n'est pas hermétique et laisse une partie du gaz s'échapper dans le four de traitement thermique, par exemple au travers de perforations de taille comprise enter quelques microns (porosité) ou centimètres (orifices). Le gaz chaud ne doit pas contenir d'oxygène.
- combustion de gaz dans l'élément chauffant, le gaz chaud pouvant être utilisé ultérieurement pour produire de la vapeur et/ou de l'électricité (turbine). Dans ce cas le gaz chaud circule à l'intérieur de l'élément chauffant qui est creux sans contact avec l'atmosphère du four.
- combustion de gaz dans l'élément chauffant, le gaz chaud étant mélangé à l'atmosphère du four de traitement thermique apportant ainsi de la chaleur supplémentaire. La température des fumées est ajustées de manière à ce que la température des gaz contenus dans le four soit toujours inférieure à la température critique de la biomasse. Dans ce cas, le gaz circule à l'intérieur de l'élément qui n'est pas hermétique et laisse une partie du gaz s'échapper dans le four de traitement thermique, par exemple au travers de perforations de taille comprise enter quelques microns (porosité) ou centimètres (orifices). Le gaz chaud ne doit pas contenir d'oxygène.

Dans le cas de la combustion, la charge (2) n'est pas exposée directement à la flamme mais au rayonnement émis par l'élément (4, 4', 4") chauffant lui même chauffé par la flamme de la combustion ou les gaz chauds.
- moyen électrique. Dans cette mise en oeuvre, un conducteur électrique est chauffé par effet Joule à des températures supérieures à 500°C. Le conducteur peut-être directement exposé à l'atmosphère du four mais préférentiellement protégé de celle-ci au moyen d'un matériau protecteur (céramique ou métallique).

Pour limiter la zone (6) d'émission des rayonnements uniquement vers le lit (2) de charge, l'élément (4, 4', 4") chauffant est associé à au moins un panneau (5, 5') déflecteur. Le panneau (5, 5') déflecteur est placé sur les cotés et au dessus de l'élément (4, 4', 4") chauffant, par rapport à la charge qui se trouve au dessous de l'élément (4, 4', 4") chauffant, pour s'assurer que le tube tournant n'est pas chauffé par le flux radiatif. Ce panneau (5, 5') entoure l'élément (4, 4', 4") au niveau du coté opposé à la charge (2). Il est de la même longueur que l'élément (4, 4', 4") chauffant. Il peut être constitué par un seule partie ou plusieurs parties (51, 52, 52', 53, 53'), et par exemple trois parties liées entre-elles, et formant une partie centrale (51) disposée au dessus de l'élément chauffant et deux cotés (52, 53, 52', 53') disposés de part et d'autre de la partie centrale (51). Il est longitudinal et peut être en forme de demi tube (5') comme illustré sur la figure 2 ou comporter des angles formés par la liaison des différentes parties (51, 52, 53) constituant le panneau (5). Les deux cotés (52, 52', 53', 53') de ce panneau ont une taille qui leurs permets de dépasser de l'élément (4, 4', 4") chauffant. Selon un mode de réalisation de l'invention il est nécessaire de prévoir un espace entre le panneau et l'élément chauffant d'au minimum 5 cm, et de préférence supérieure à 10 cm pour permettre aux panneaux d'être refroidi par circulation de gaz entre l'élément chauffant et le panneau et évité une surchauffe.

Dans tous les cas, les deux cotés (52, 52', 53', 53') sont orientés de façon à former un angle permettant aux rayonnements de couvrir toute la surface (3) du lit de la charge (2). Le matériau utilisé pour ce panneau (5, 5') est un matériau réflecteur empêchant les rayons de passer et résistant à la chaleur. Le matériau utilisé peut être tout type de matériau, et notamment des matériaux réfléchissant pour éviter qu'ils ne chauffent à leur tour :aluminium par exemple, ayant les propriétés nécessaires pour être utilisé dans le dispositif selon l'invention, bien connu de l'homme du métier. De cette façon les rayons émis au dessus de l'élément (4, 4', 4") chauffant sont renvoyés par le panneau (5, 5') vers la charge (3) qui est située en dessous de l'élément (4, 4', 4") chauffant. De la même façon que l'élément (4, 4', 4") chauffant, ce panneau (5, 5') est fixé par chacune de ses deux extrémités et ne tourne pas avec le four (1). Il n'a aucun pratiquement pas de point de contact avec les parois du tube du four (1), ni avec l'élément (4, 4', 4") chauffant. Il est possible toutefois de tolérer des points de contact avec le four et éventuellement l'élément chauffant pour des raisons mécaniques de rigidité. Le panneau est fixé à ses extrémités par des techniques, bien connues de l'homme du métier, permettant de maintenir l'étanchéité voulue et nécessaire pour le traitement thermique dans le four (1) tournant.

La présence de ce panneau (5, 5') forme ainsi un cône (6) de rayons dirigés uniquement vers la charge (3). La paroi interne du tube du four (1) tournant n'est pas chauffée inutilement, il n'y a pas de risque de surchauffe et la totalité des rayons est dirigé vers la charge ce qui permet un chauffage plus efficace et augmente ainsi la capacité de traitement thermique et notamment de torréfaction du four.

Le dispositif selon l'invention permet ainsi de réaliser la torréfaction de matériau solide et notamment de plaquettes biomasse dont l'épaisseur est en générale comprise entre 1 mm et 30 mm, la largeur est en générale comprise entre 1 mm et 40 mm et la longueur est en générale comprise entre 1 mm et 100 mm, à des températures comprises en générale entre 80°C et 400°C et de préférence entre 150°C et 280°C et en absence d'oxygène. La biomasse traitée dans un tel dispositif, c'est-à-dire un four tournant chauffant (1) comprenant une deuxième source de chaleur apportée par un élément chauffant (4, 4') disposé dans le four (1), permet d'obtenir un matériau torréfié plus friable et donc plus facile à broyer. Les particules résultants du broyage suivant la torréfaction sont ainsi plus rondes.

En général l'élément chauffant est utilisé comme seul moyen de chauffage, mais il peut également être utilisé pour chauffer les parois (à une température contrôlée), de façon à simplifier l'installation. Cela peut être intéressant pour des installations de petite taille, ou le chauffage est électrique

L'exemple comparatif suivant illustre la présente invention.

### Exemple illustré sur la figure 1 :

Dans un four (1) tournant de 6 m de diamètre et de longueur 20 m, est disposé un élément (4, 4', 4") radiant ayant les caractéristiques suivantes
- température de 800°C,
- longueur de 20 m (celle du four),
- largeur de 0,5 m,
- forme plane,
- chauffé par passage de gaz chaud,
- placé à 4 m de la surface du lit (3) de biomasse.

La présence de l'élément (4, 4', 4") chauffant permet d'augmenter la capacité de traitement thermique du four (1) tournant de 77% par rapport à un four tournant classique ne comportant pas d'élément chauffant supplémentaire.

Un des avantages de cette invention est l'augmentation de quantité de chaleur transférée à la charge par unité de longueur. Il en résulte une augmentation de la capacité à iso-géométrie ou une diminution de la taille du réacteur à iso-capacité.

De plus ce dispositif peut être installé dans des fours tournants préexistants à moindre coût.

## Revendications

1. Four tournant (1) destiné au traitement thermique de matériaux solides comprenant au moins un tube tournant dans lequel sont introduits les matériaux solides et un moyen de chauffage externe au tube tournant permettant de réaliser une partie du traitement thermique en absence d'oxygène, **caractérisé en ce qu'**il comporte un deuxième moyen de chauffage de la charge pour améliorer le traitement thermique, formé par un élément (4, 4', 4") chauffant, ne tournant pas avec le four, positionné pour être au dessus de la charge lorsque le four tourne et au moins un panneau déflecteur entourant l'élément (4, 4', 4") chauffant au niveau du coté opposé à la charge (2), disposé à l'intérieur du tube tournant.

2. Four tournant selon la revendication 1 **caractérisé en ce que** l'élément (4, 4', 4") chauffant est rectiligne, longitudinal et parcourt toute la longueur du four tournant.

3. Four tournant selon une des revendications 1 ou 2 **caractérisé en ce que** la section de l'élément (4, 4', 4") chauffant est polygonale ou ronde ou ovoïde.

4. Four tournant selon une des revendications 1 à 2 **caractérisé en ce que** la section de l'élément (4, 4', 4") chauffant est plane (4) ou concave (4') ou convexe (4").

5. Four tournant selon une des revendications 1 à 4 **caractérisé en ce que** la largeur de l'élément (4, 4', 4") chauffant est comprise entre 1/60^{ième} et 2/3 du diamètre interne du tube du four (1) et la hauteur est comprise entre 1/20 et 4/4 de la largeur de l'élément (4, 4', 4") chauffant.

6. Four tournant selon une des revendications 1 à 5 **caractérisé en ce que** l'élément (4, 4', 4") chauffant est fixé par ses extrémités indépendamment du tube du four (1).

7. Four tournant selon une des revendications 1 à 6 **caractérisé en ce que** la position l'élément (4, 4', 4") chauffant dans le tube (1) du four est excentrée, par rapport à l'axe longitudinal central du tube (1) du four, dans la direction opposée à celle où se trouve la charge (2).

8. Four tournant selon une des revendications 1 à 7 **caractérisé en ce que** l'élément (4, 4', 4") chauffant est creux ou plein, étanche ou perforé.

9. Four tournant selon une des revendications 1 à 8 **caractérisé en ce que** l'élément (4, 4', 4") chauffant est chauffé par circulation d'un gaz très chaud à l'intérieur de l'élément chauffant ou par combustion ou par un moyen électrique.

10. Four tournant selon une des revendications 1 à 9 **caractérisé en ce que** le panneau déflecteur (5, 5') est longitudinal et de la même longueur que l'élément (4, 4', 4") chauffant.

11. Four tournant selon une des revendications 1 à 10 **caractérisé en ce que** le panneau déflecteur (5, 5') est constitué par un seule partie ou plusieurs parties (51, 52, 52', 53, 53') liées entre-elles, et formant une partie centrale (51) disposée au dessus de l'élément chauffant et deux cotés (52, 53, 52', 53') disposés de part et d'autre de la partie centrale (51).

12. Four tournant selon la revendication 11 **caractérisé en ce que** le panneau déflecteur (5, 5') est en forme de demi tube (5') ou comporte des angles formés par la liaison des différentes parties (51, 52, 53) le constituant.

13. Four tournant selon une des revendications 11 ou 12 **caractérisé en ce que** les deux cotés (52, 52', 53', 53') du panneau déflecteur (5, 5') ont une taille qui leurs permets de dépasser de l'élément (4, 4', 4") chauffant.

14. Four tournant selon une des revendications 11 à 13 **caractérisé en ce que** les deux cotés (52, 52', 53', 53') sont orientés de façon à former un angle permettant aux rayonnements (6) de couvrir toute la surface (3) du lit de la charge (2).

15. Four tournant selon une des revendications 1 à 14 **caractérisé en ce que** le panneau (5, 5') déflecteur est fixé par ses extrémités indépendamment du tube du four (1) et ne tourne pas avec le four.

16. Utilisation du four tournant selon l'une des revendications 1 à 15 pour réaliser le traitement thermique de biomasse.

17. Utilisation du four tournant selon la revendication 16 dans lequel le traitement thermique est un traitement par torréfaction de biomasse solide.

18. Utilisation du four tournant selon la revendication 16 dans lequel le traitement thermique est un traitement thermique radiatif de biomasse.

## Claims

1. Rotary furnace (1) that is designed for the heat treatment of solids comprising at least one rotary tube in which the solids are introduced and a heating means outside of the rotary tube that makes it possible to conduct a portion of the heat treatment in the absence of oxygen, **characterized in that** it comprises a second means for heating the feedstock for improving the heat treatment, formed by a heating element (4, 4', 4"), which does not rotate with the furnace, positioned to be above the feedstock when the furnace rotates and at least one deflector panel that surrounds the heating element (4, 4', 4") at the side opposite to the feedstock (2), arranged inside the rotary tube.

2. Rotary furnace according to claim 1, wherein the heating element (4, 4', 4") is rectilinear, longitudinal, and travels the entire length of the rotary furnace.

3. Rotary furnace according to one of claims 1 or 2, wherein the section of the heating element (4, 4', 4") is polygonal or round or egg-shaped.

4. Rotary furnace according to one of claims 1 to 2, wherein the section of the heating element (4, 4', 4") is flat (4) or concave (4') or convex (4").

5. Rotary furnace according to one of claims I to 4, wherein the width of the heating element (4, 4', 4") is between 1/60^{th} and 2/3 of the inside diameter of the tube of the furnace (1), and the height is between 1/20 and 4/4 of the width of the heating element (4, 4', 4").

6. Rotary furnace according to one of claims 1 to 5, wherein the heating element (4, 4', 4") is attached by its ends, independently of the tube of the furnace (1).

7. Rotary furnace according to one of claims 1 to 6, wherein the position of the heating element (4, 4', 4") in the tube (1) of the furnace is eccentric, relative to the central longitudinal axis of the tube (1) of the furnace, in the direction that is opposite to that where the feedstock (2) is found.

8. Rotary furnace according to one of claims I to 7, wherein the heating element (4, 4', 4") is hollow or solid, sealed or perforated.

9. Rotary furnace according to one of claims 1 to 8, wherein the heating element (4, 4', 4") is heated by circulation of a very hot gas inside the heating element or by combustion or by an electrical means

10. Rotary furnace according to one of claims 1 to 9, wherein the deflector panel (5, 5') is longitudinal and of the same length as the heating element (4, 4', 4").

11. Rotary furnace according to one of claims 1 to 10, wherein the deflector panel (5, 5') consists of a single part or several parts (51, 52, 52', 53, 53') that are linked to one another and that form a central part (51) that is arranged above the heating element and two sides (52, 53, 52', 53') that are arranged on both sides of the central part (51).

12. Rotary furnace according to claim 11, wherein the deflector panel (5, 5') is in the form of half-tube (5') or comprises angles that are formed by the connection of different parts (51, 52, 53) that constitute it.

13. Rotary furnace according to one of claims 11 or 12, wherein the two sides (52, 52', 53, 53') of the deflector panel (5, 5') are of a size that makes it possible for them to go beyond the heating element (4, 4', 4").

14. Rotary furnace according to one of claims 11 to 13, wherein the two sides (52, 52', 53, 53') are oriented so as to form an angle that makes it possible for the radiation (6) to cover the entire surface (3) of the bed of the feedstock (2).

15. Rotary furnace according to one of claims I to 14, wherein the deflector panel (5, 5') is attached by its ends independently of the tube of the furnace (1) and does not rotate with the furnace.

16. Use of the rotary furnace according to one of claims 1 to 15 for conducting the heat treatment of biomass.

17. Use of the rotary furnace according to claim 16, wherein the heat treatment is a treatment by roasting solid biomass.

18. Use of the rotary furnace according to claim 16, wherein the heat treatment is a radiative heat treatment of biomass.

## Patentansprüche

1. Drehrohrofen (1), der für die Wärmebehandlung von festen Stoffen bestimmt ist, umfassend mindestens ein Drehrohr, in das die festen Stoffe eingeführt werden, und ein externes Heizmittel für das Drehrohr, das es ermöglicht, einen Teil der Wärmebehandlung ohne Vorhandensein von Sauerstoff durchzuführen, **dadurch gekennzeichnet, dass** er ein zweites Heizmittel für die Ladung umfasst, um die Wärmebehandlung zu verbessern, welches von einem Heizelement (4, 4', 4") gebildet ist, das sich nicht mit dem Ofen dreht und derart angeordnet ist, dass es sich über der Ladung befindet, wenn sich der Ofen dreht, und mindestens eine Ablenkplatte umfasst, die das Heizelement (4, 4', 4") im Bereich der der Ladung (2) gegenüber liegenden Seite umgibt und im Inneren des Drehrohrs angeordnet ist.

2. Drehrohrofen nach Anspruch 1, **dadurch gekennzeichnet, dass** das Heizelement (4, 4', 4") gerade und länglich ist und über die gesamte Länge des Ofens verläuft.

3. Drehrohrofen nach einem der Ansprüche 1 oder 2, **dadurch gekennzeichnet, dass** der Querschnitt des Heizelements (4, 4', 4") polygonal oder rund oder oval ist.

4. Drehrohrofen nach einem der Ansprüche 1 bis 2, **dadurch gekennzeichnet, dass** der Querschnitt des Heizelements (4, 4', 4") eben (4) oder konkav (4') oder konvex (4") ist.

5. Drehrohrofen nach einem der Ansprüche 1 bis 4, **dadurch gekennzeichnet, dass** die Breite des Heizelements (4, 4', 4") zwischen 1/60-stel und 2/3 des Innendurchmessers des Rohrs des Ofens (1) beträgt, und dass die Höhe zwischen 1/20 und 4/4 der Breite des Heizelements (4, 4', 4") beträgt.

6. Drehrohrofen nach einem der Ansprüche 1 bis 5, **dadurch gekennzeichnet, dass** das Heizelement (4, 4', 4") mit seinen Enden unabhängig vom Rohr des Ofens (1) befestigt ist.

7. Drehrohrofen nach einem der Ansprüche 1 bis 6, **dadurch gekennzeichnet, dass** die Position des Heizelements (4, 4', 4") in dem Rohr (1) des Ofens exzentrisch in Bezug zur Längsmittelachse des Rohrs (1) des Ofens in die Richtung ist, die zu jener, in der sich die Ladung (2) befindet, entgegen gesetzt ist.

8. Drehrohrofen nach einem der Ansprüche 1 bis 7, **dadurch gekennzeichnet, dass** das Heizelement (4, 4', 4") hohl oder voll, dicht oder perforiert ist.

9. Drehrohrofen nach einem der Ansprüche 1 bis 8, **dadurch gekennzeichnet, dass** das Heizelement (4, 4', 4") durch Zirkulation eines sehr heißen Gases im Inneren des Heizelements oder durch Verbrennung oder durch ein elektrisches Mittel erhitzt wird.

10. Drehrohrofen nach einem der Ansprüche 1 bis 9, **dadurch gekennzeichnet, dass** die Ablenkplatte (5, 5') längs ausgerichtet ist und dieselbe Länge wie das Heizelement (4, 4', 4") aufweist.

11. Drehrohrofen nach einem der Ansprüche 1 bis 10, **dadurch gekennzeichnet, dass** die Ablenkplatte (5, 5') von einem einzigen Teil oder mehreren Teilen (51, 52, 52', 53, 53') gebildet ist, die miteinander verbunden sind und einen zentralen Teil (61), der über dem Heizelement angeordnet ist, und zwei Seiten (52, 53, 52', 53') bilden, der beiderseits des zentralen Teils (51) angeordnet ist.

12. Drehrohrofen nach Anspruch 11, **dadurch gekennzeichnet, dass** die Ablenkplatte (5, 5') die Form eines Halbrohrs (5') hat oder Winkel umfasst, die durch die Verbindung der verschiedenen Teile (4, 4', 4"), aus denen sie besteht, gebildet sind.

13. Drehrohrofen nach einem der Ansprüche 11 oder 12, **dadurch gekennzeichnet, dass** die beiden Seiten (52, 52', 53, 53') der Ablenkplatte (5, 5') eine Größe haben, die es ihnen ermöglicht, über das Heizelement (4, 4', 4") hinauszuragen.

14. Drehrohrofen nach einem der Ansprüche 11 bis 13, **dadurch gekennzeichnet, dass** die beiden Seiten (52, 52', 53, 53') derart ausgerichtet sind, dass sie einen Winkel bilden, der es den Strahlen (6) ermöglicht, die gesamte Oberfläche (3) des Betts der Ladung (2) abzudecken.

15. Drehrohrofen nach einem der Ansprüche 1 bis 14, **dadurch gekennzeichnet, dass** die Ablenkplatte (5, 5') mit ihren Enden unabhängig vom Rohr des Ofens (1) befestigt ist und sich nicht mit dem Ofen dreht.

16. Verwendung des Drehrohrofens nach einem der Ansprüche 1 bis 15 für die Durchführung der Biomassewärmebehandlung.

17. Verwendung des Drehrohrofens nach Anspruch 16, bei der die Wärmebehandlung eine Behandlung durch Dörren von fester Biomasse ist.

18. Verwendung des Drehrohrofens nach Anspruch 16, bei der die Wärmebehandlung eine Wärmebehandlung von Biomasse durch Strahlen ist.
